# EUROPEAN PATENT SPECIFICATION

(11) **EP 3 002 370 B1**
(45) Date of publication and mention of the grant of the patent: **06.09.2017**
(21) Application number: 15158659.1
(22) Date of filing: 11.03.2015
(51) Int. Cl.: E01F 15/04

(54) **A ROAD BARRIER AND A METHOD FOR CONTROLLING IT**
STRASSENSPERRE UND VERFAHREN ZU IHRER STEUERUNG
BARRIÈRE ROUTIÈRE ET PROCÉDÉ DE COMMANDE DE CELLE-CI

(30) Priority: 30.09.2014 EP 14186985
(43) Date of publication of application: 06.04.2016
(73) Proprietor: Instytut Badawczy Dróg I Mostów, 03-302 Warszawa (PL)
(72) Inventor: Kula, Tomasz, 01-410 Warszawa (PL); Dzienis, Tadeusz, 01-452 Warszawa (PL); Wicher, Ewa, 05-200 Wolomin (PL); Kucharski, Dawid, 02-781 Warszawa (PL); Karkowski, Michal, 05-120 Legionowo (PL); Rozewicz, Krzysztof, 88-100 Inowroclaw (PL); Kaszowski, Daniel, 88-190 Barcin (PL); Kazimierski, Krzysztof, 88-140 Gniewkowo (PL); Pilarski, Krzysztof, 88-140 Gniewkowo (PL)
(74) Representative: Kancelaria Eupatent.pl Sp. z.o.o

(56) References cited:
- CN-U- 201 778 296
- DE-A1- 3 702 794
- GB-A- 1 063 803
- US-A- 4 784 515
- US-A- 5 301 990

## Description

### TECHNICAL FIELD

The object of the present invention is an energy-absorbing road barrier, designed to dampen impacts of vehicles and to improve road safety.

### BACKGROUND

Road barriers are protective structures mounted along roads for vehicular traffic. The road barriers are designed to physically prevent a vehicle from running off the road at locations, where it is particularly dangerous, for example on bridges and embankments. Road barriers can be also used to prevent a vehicle from driving into a roadway intended for the opposite direction of traffic, for example on a highway, or to prevent driving into a pedestrians lane, as well as to avoid collision with objects or fixed obstacles located close to the roadway, such as buildings, electricity pylons or the like.

Road barriers must comply with a number of criteria related to constructional and material parameters related to safety of the barrier. Typically, the road barrier construction must have an appropriate:
- containment level: determining what kind of car the road barrier is able to stop; it characterizes indirectly the strength of the barrier construction and its energy absorption capabilities;
- impact severity: the value of this parameter indicates whether the passengers of small cars have a chance to survive impacting the barrier; characterizes indirectly rigidity of the barrier and the ability of the reduction of the impact;
- normalized working width: characterizes the amount of space a barrier occupies at a time of impact - together with its deformation the impact.

From a constructional point of view, it is difficult to design a barrier having a high containment level (so that the road barrier effectively prevents a road vehicle having a relatively large weight from leaving the road), and at the same time characterized by an appropriate level of impact severity (i.e. reducing an impact and decreasing injury of persons present in a vehicle for vehicles with a relatively low weight).

There are known various types of road barriers, which allow absorption of a portion of kinetic energy and reduction of a collision with a vehicle.

A US patent US6010275 discloses a road barrier comprising impact energy absorbing elements and a barrier in a form of a row of posts connected to a guide. The absorbing elements have a form of cylindrical elements made of elastic material, for example rubber tires. Thus, the dimensional parameters of these elements define a fixed containment level and a fixed impact severity of the barrier.

A US patent US4073482 discloses modular components, for mounting behind the barrier, to absorb the impact energy. Each element comprises a stabilizer in a form of a cylindrical container having a lid and an inner module in the form of a cup to be filled with loose material such as sand. These modular elements are not suitable for interconnecting, but are to be arranged behind the barriers - the distribution and the weight of the modular elements allows to gradually absorb the impact energy.

A US patent US4674911 discloses a barrier in a form of an airbag to be mounted along roads. During an impact, the airbag containers are filled with air providing impact reduction. The airbag filled with air may provide not enough absorption for collisions with large vehicles. Moreover, it requires great impact resistance of the airbag, because in case of breaking of the airbag its ability to reduce impact immediately decreases.

A GB patent application GB1063803 discloses a vehicle crash-barrier that has slow-recoil shock-absorbing means between a rigid barrier and a rigid barrier support.

A CN utility model application CN201778296 discloses a hydraulic road collision avoiding device, which comprises a hydraulic energy absorption component installed on a foundation and a collision avoidance board.

A DE patent application DE3702794 discloses an impact absorber for protecting fixed constructions on traffic routes, having a plurality of compressible energy-converting elements comprising frames which are arranged transversely to the longitudinal axis of the impact absorber. In the impact absorber there are displaceable and bear crossbeams at their sides, said frames accommodate a horizontal tubular body in a displaceably mounted fashion.

A US patent US4784515 discloses a highway barrier that includes a collapsible guardrail assembly and a rotatable beam which is mounted between the rearward end of the guardrail assembly and a roadside hazard.

The road restraint systems presented above, do not address the main problem associated with the construction of the barrier in a satisfactory manner. In particular, they do not allow for effective adaptation of the mechanical strength of the construction of the barriers to the weight of large vehicles (e.g. trucks) and small vehicles (e.g. passenger cars), in order to effectively hold vehicles on the lane of the road and with adequate reduction of impact in order to reduce injury to occupants of the vehicle.

It would therefore be desirable to develop a road barrier having a construction which would allow to controllably reduce the vehicle impact, adaptively to the weight and speed of the vehicle, while also maintaining high mechanical strength of the barrier structure.

### SUMMARY

There is presented a road barrier, a road safety system and a method for controlling of a road barrier according to the appended claims.

### BRIEF DESCRIPTION OF DRAWINGS

The object of the invention is presented by means of exemplary embodiments on a drawing, in which:
Fig. 1 shows schematically the road barrier as viewed from above;
Fig. 2 shows schematically the road barrier as viewed from the back side;
Figure 3 shows schematically a fastening assembly for a tank and a support element;
Fig. 4 shows schematically a road safety system comprising a vehicle tracking system and the road barrier; and
Fig. 5 presents a method for controlling the road barrier according to the invention.

### DETAILED DESCRIPTION

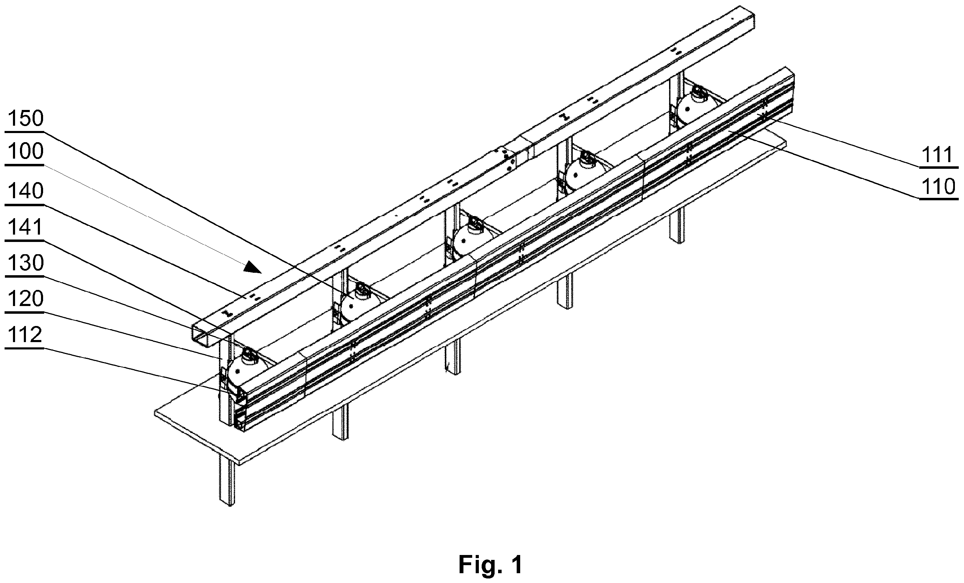

Fig. 1 shows schematically a section of a road barrier 100. The road barrier 100 comprises a guide 110 in a form of a profiled band, preferably made of steel, or a band made of a plastic or a composite material having appropriate strength parameters. The guide preferably runs along the full length of the barrier 100 and is mounted such that the front side 111 of the band is facing the road.

The individual, elongated segments of the band, forming the guide 110, may be connected ahead according to standard techniques of bonding applied for this type of structures. For example, the elongated segments of the band 110 may be overlapped and bonded by screws.

In addition, the guide 110, at the inner side 112, opposite to the front side, may have dampening elements, which are mounted to the surface of the band, preferably by means of glue. The dampening elements are made of energy absorbing materials.

In another embodiment, the guide 110 may have a layered structure. For example, the guide may comprise two layers in a form of metal bands connected by means of rivets and a strengthening bar, whereas the outer layer serves as a deformable front of the guide 111 for directly contacting an impacting vehicle while the inner layer 112 has the dampening elements mounted thereon (not shown in the drawing).

The function of the guide 110 is to dampen and spread a part of the energy and to direct the impacting vehicle longitudinally along the guide front 111, during a collision with the protective barrier 100.

The guide 110 is longitudinally mounted, at its inner side, to a front surface of a row of supporting elements 120 with a set of booms 130.

The supporting elements 120, preferably in a form of posts, may be positioned along a roadside, in parallel to each other, typically at equal distances.

The posts 120 may be mounted perpendicularly do road surface, along the edge line of the road, for example directly in the ground - they may be pushed into the ground, or may be indirectly anchored: in a concrete prefabricate or a poured concrete foundation.

The posts 120 may also be embedded in steel sleeves.

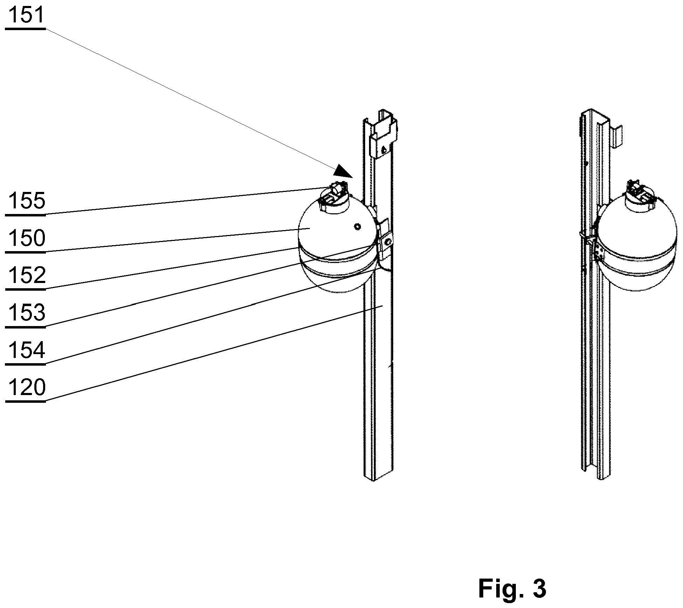

Furthermore, the supporting elements 120 of the barrier 100 according to the invention, may be made of steel profiles, for example c-shaped (as shown in Fig. 3), t-shaped or double-T-shaped or having another cross-section - depending on the desired constructional parameters of the barrier 100.

Additionally, the barrier 100 may have mounted, on its full length, an elongated strengthening element 140, mounted to the row of posts, preferably having its cross-sectional dimensions similar to the dimensions of the cross-section of the post 120.

The elongated strengthening element may be a steel profile 140, for example having a closed cross-section, square or round. The profile may be mounted to tops of the supporting elements 120 in parallel to the guide 110, preferably by means of holders 141.

The elongated strengthening element 140 has the function of stiffening of the construction and transmitting the vehicle impact energy from one supporting element to the neighboring elements.

The boom 130 may be a single element functioning as a supporting element of the guide 110. Different booms may be used that are typically applied as road barriers booms, for example booms in a form of a steel sheet or a steel profile having a shape substantially resembling the letter "L" or "V" or another shape.

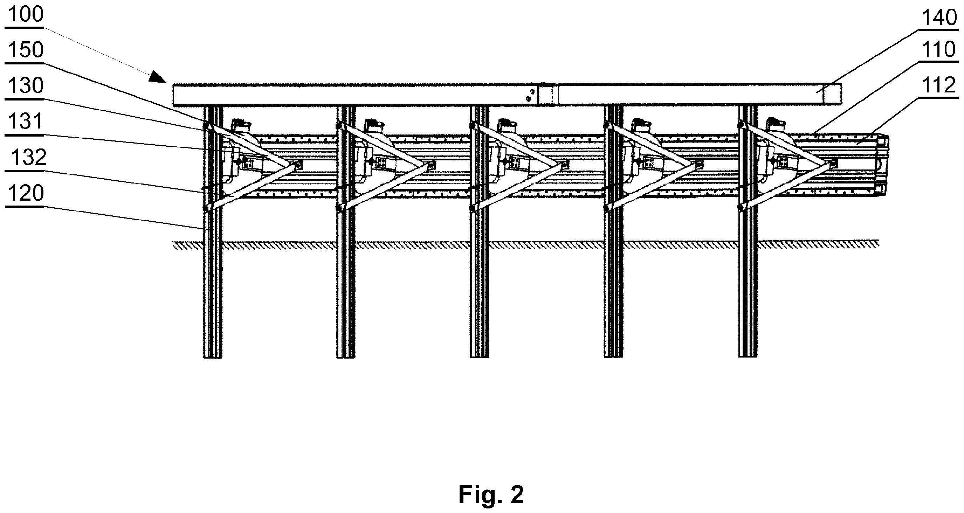

As shown in Fig. 2, the boom 130 may be also formed of a set of two supporting elements: the upper element 131 and the lower element 132 in a form of straight, elongated elements made of a steel sheet and mounted on the supporting element 120 at the level of the container 150 and separated from each other by a distance equal to the height of the container 150 and mounted to the guide 110 at one point. Such two-element construction of the boom 131, 132 resembling the "V" shape does not significantly reduce the influence of the guide 110 on the container 150 during an impact of a vehicle in the barrier 100.

The fluid container 150 serves to reduce the impact of the vehicle and is positioned on the inner side of the guide. Preferably, the road barrier 100 may comprise a row of containers 150 located on the inner side of the guide.

The dimensions of the containers 150 may be different, whereas it is preferred that the container 150 has its height lower than the height of the guide 110 such that it is covered with the inner side of the guide 112. The container may have different shapes, whereas preferably the container 150 has a ring-shaped or pipe-shaped jacket having attached, for example welded, oval end caps.

The container 150 is filled with fluid, preferably liquid, preferably having a low freezing point, the amount of which is adjusted depending on the parameters of the predicted impact of vehicle to the barrier, such as the speed of the vehicle, the mass of the vehicle or the angle of impact to the barrier.

Fig. 3 presents schematically a mounting assembly 151 of the container 150 and the supporting element 120. The container 150 may be mounted to the supporting element 120 via the mounting assembly 151. For example, the mounting assembly 151 may comprise mounting means for mounting the container, such as a band 152, for belting the container, with a screw to regulate the strength of pull of the band (the material and dimensions of the band are selected so as to provide appropriate mounting of the container while not influencing deforming of the container during vehicle impact) and means for mounting of the container to a post 120, for example a mounting sheet metal mounted to the post at a location of bonding of the band and the post 153.

Furthermore, as a part of the mounting assembly 151, the material of the post may be additionally locally strengthened in the area of contact with the mounting sheet metal 153. The sheet metal 153 is used to increase the contact area of the container 150 with the supporting element 120.

The mounting assembly of the container may also comprise a cord, for example made of metal, connecting the fluid container 150 with the supporting element 120. The cord 154 may be ended with a clamp on the supporting element. The cord 154 constitutes an additional safety measure in relation to disconnecting of these elements during vehicle impact in the road barrier 100.

The fluid container 150, as a component of the protective barrier, is located at the outer side of the guide and controls intensity of the reduction of a vehicle impact by taking into account the weight and speed of the vehicle, whereas the barrier structure, comprising a row of supporting elements with a mounted guide, provides for high mechanical strength of the road barrier.

In order to achieve different containment levels adjusted individually to vehicle weight, the container may be filled with fluid at different amounts dependent on vehicle weight and/or vehicle speed - which will result in differences in reduction of impact provided by the fluid container

Conventional pressure containers may be used as fluid containers 150. The container may comprise connectors including a small connector for periodic inspection of the level of the fluid filling the container and a large connector for fast fluid outlet as well as other connectors such as outlet and/or inlet connector. The inlet connector is useful in case after fluid outlet the barrier has not been use during impact and the level of the fluid may be increased manually or automatically (for example with a use of a suitable pump).

The container may comprise a container lid, for example attached to the outlet connector with a hinge, for example a screw hinge. Additionally, the container is connected with a controller device 155 preferably cooperating with a vehicle tracking system 160. The controller 155 may be in a form of a controlling device mounted to the lid of the container 150.

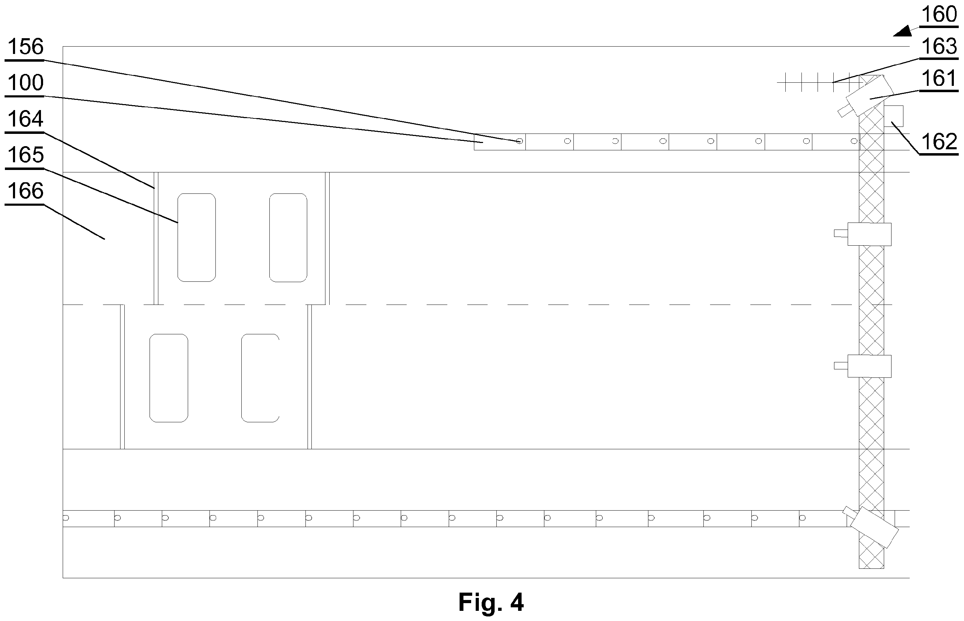

Fig. 4 schematically shows a system for managing road safety comprising a module for vehicle tracking 160 and a protective barrier 100, equipped with a controller 155, communicatively coupled to the vehicle tracking module 160.

The communication may be carried out in a wired or wireless manner and utilize technologies such as GSM, UMTS, Bluetooth, DSL or the like, preferably bidirectional.

The vehicle tracking module 160 allows for identification of vehicles, preferably in real time, for example to distinguish between passenger cars and trucks, measurement of traffic on the road, prediction of trajectory of vehicles and sending a signal and/or a group of control signals to a receiver 156 of the road barrier 100, thereby allowing for adaptation of the containment level to the weight and speed of the vehicle.

The vehicle tracking module 160 may comprise different devices configured to detect traffic and preferably measure the speed and weight of vehicles moving at given road segment. For example, the vehicle tracking module 160 may comprise a set of measuring cameras 161 positioned preferably over different road lanes along which the road barrier 100 is mounted.

The cameras 161 may cooperate with a computer comprising software configured to diagnose traffic on the road 166 and to generate control signals transmitted, for example with a transmitter 163, to a receiver 156 of the barrier 100, from which the signals are transmitted to controllers 155 for controlling the level of the fluid in the containers 150.

The vehicle tracking module 160 may optionally comprise weight sensors 164 positioned in the road 166 for measuring the weight of vehicles moving on the road. Additionally, the vehicle tracking module 160 may be equipped with a device configured to classify traffic structure and/or to determine the speeds of passing vehicles, for example in a form of an induction loop. Data from the measuring devices 161, 164, 165 are transmitted to a traffic analysis module 162, which is configured to predict trajectories of vehicles and to detect predicted vehicle weight, its speed and/or predicted area of impact in a barrier and to generate, on this basis, a control signal to be sent to the road barrier.

On the basis of this information there are determined control parameters for the containers 150. For example, the control signal may comprise information defining parameters, to which selected containers shall be adjusted - for example, serial numbers of the containers and their parameters, for example the amount of fluid to be outlet from the container.

The road safety system comprising a vehicles tracking module 160 cooperating with a road barrier 100 may operate in the following way. The vehicles tracking module 160 may analyze vehicles movement on the road and predict vehicles trajectory.

In case of detection of an incorrectly moving vehicle, the tracking module sends a signal to the road barrier, while including in the signal information on predicted vehicle weight, its speed and/or predicted area of impact into the barrier, which allows for adjusting the level of the fluid of at least one container to the speed and/or mass of the incorrectly moving vehicle. For example, the controller cooperating with the barrier may, in case of receiving the control signal, release a blocking pin of the large connector thereby causing outlet of some of the fluid present in the container so as to absorb impact from a small vehicle.

The road safety system may adjust the level of the fluid of a container to the speed and/or weight of each vehicle moving on the road and diagnosed by the vehicle tracking system. The safety system may also adjust the level of the fluid in the container to the speed and/or weight of the first vehicle, moving incorrectly on the road, for which there is a high probability of impacting the barrier 100.

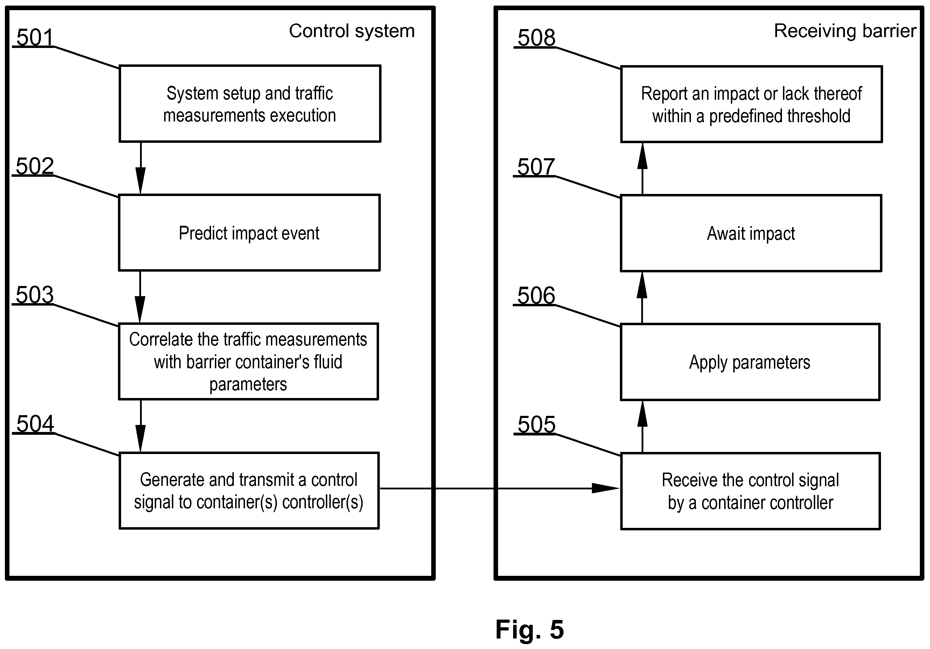

Fig. 5 presents a method for controlling of a road barrier according to the invention. The process starts at step 501 from system setup and traffic measurements execution. The system setup may involve defining identifiers of containers, types of containers 150 at given locations, types of fluids used in these containers and information on whether the containers are refillable or disposable. Then, the road traffic is monitored.

Next, at step 502, the system predicts an impact event based on the measurements as previously described. After executing the measurements and defining that there is a high risk of impact with a barrier at a given location, for one or more containers in the vicinity of the location there is prepared a set of parameters 503 based on the measurements as described previously.

Subsequently, at step 504, there is generated and sent a control signal to the previously identified containers. This step ends the data processing at a managing system, which may control a plurality of barriers 100.

The control signals are received by the containers controllers at step 505 and subsequently the parameters indicated by the control signal are applied 506.

Subsequently, at step 507, the barrier controller 155 awaits for the impact within a given time threshold. To this end the barrier 100 may comprise at least one impact sensor communicatively coupled to the controller. At step 508 the container controller 155 may report an impact or lack thereof within a predefined threshold.

The road barrier according to the invention provides for control of reduction of an impact of a vehicle while taking into account weight and speed of the vehicle while also maintaining high mechanical strength of the barrier structure thereby increasing road safety level and decreasing injury of persons present in a vehicle during impact.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the scope of the claims. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A road barrier comprising a guide (110) mounted on a row of supporting elements (120) by means of booms (130), the road barrier further comprising containers (150) with fluid mounted between the guide (110) and the supporting elements (120), the containers (150) being configured to absorb the energy of an impact of a vehicle against the guide (110), **characterized in that** the containers (150) comprise a controllable fluid outlet control device (155) communicatively connected with a receiver (156) of a control signal.

2. The road barrier, according to claim 1, **characterized in that** the supporting elements (120) in the row are connected with an elongated strengthening element (140) parallel to the guide (110).

3. The road barrier, according to any of the previous claims, **characterized in that** the fluid container (150) is a container comprising a controllable fluid level control device (155).

4. A road safety system comprising the road barrier according to any of claims 1-3 and a vehicle tracking module (160) comprising devices (161, 164, 165) configured to measure traffic and a device for traffic analysis (162) communicatively connected, by means of a transmitter (163) with the receiver (156), for transmitting the control signal.

5. The system according to claim 4 **characterized in that** the traffic measurement devices comprise cameras (161), weight sensors (164) and/or induction loops (165).

6. The system according to claim 4 or 5 **characterized in that** the device for tracking analysis (162) is configured to determine weight, speed and/or a predicted area of impact of a vehicle into the barrier (100).

7. A method for controlling of a road barrier in the road safety system according to any of claims 4-6, the method comprising the steps of:
• setting up (501) the system and execution of traffic measurements by the devices (161, 164, 165) configured to measure traffic, whereas the system setup involves defining identifiers of containers, types of containers (150) at given locations, types of fluids used in these containers and/or information on whether the containers are refillable or disposable;
• predicting (502) an impact event based on the measurements and in case of defining that there is a high risk of impact with a barrier at a given location, for one or more containers in the vicinity of the location preparing a set of parameters (503) based on the measurements; and
• generating and sending (504) a control signal to the previously identified containers.

## Patentansprüche

1. Straßensperre, aufweisend eine Führung (110), die auf einer Reihe Abstützelemente (120) mittels Gestänge (130) montiert ist, wobei die Straßensperre ferner Behälter (150) mit Fluid aufweist, die zwischen der Führung (110) und den Abstützelementen (120) montiert sind, wobei die Behälter (150) gestaltet sind, um die Energie eines Stoßes eines Fahrzeugs gegen die Führung (110) aufzunehmen, **dadurch gekennzeichnet, dass** die Behälter (150) eine steuerbare Fluidauslass-Steuerungsvorrichtung (155) aufweisen, die kommunikativ mit einem Empfänger (156) eines Steuersignals verbunden ist.

2. Straßensperre nach Anspruch 1, **dadurch gekennzeichnet, dass** die Abstützelemente (120) in der Reihe mit einem langgestreckten Verstärkungselement (140) parallel zur Führung (110) verbunden sind.

3. Straßensperre nach einem der vorhergehenden Ansprüche, **dadurch gekennzeichnet, dass** der Fluidbehälter (150) ein Behälter aufweisend eine steuerbare Fluidniveau-Steuerungsvorrichtung (155) ist.

4. Straßenverkehrssicherheitssystem, aufweisend die Straßensperre nach einem der Ansprüche 1- 3 und ein Fahrzeugverfolgungsmodul (160) aufweisend Vorrichtungen (161, 164, 165) die gestaltet sind, um Verkehr zu messen, und eine Vorrichtung zur Verkehrsanalyse (162), die kommunikativ mittels eines Senders (163) mit dem Empfänger (156) verbunden ist, um das Steuersignal zu senden.

5. System nach Anspruch 4, **dadurch gekennzeichnet, dass** die Verkehrsmessungsvorrichtungen Kameras (161), Gewichtssensoren (164) und/oder Induktionsschleifen (165) aufweisen.

6. System nach Anspruch 4 oder 5, **dadurch gekennzeichnet, dass** die Vorrichtung zur Verkehrsanalyse (162) gestaltet ist, um Gewicht, Geschwindigkeit und/oder einen prognostizierten Stoßbereich eines Fahrzeugs in die Straßensperre (100) zu bestimmen.

7. Verfahren zum Steuern einer Straßensperre in einem Straßenverkehrssicherheitssystem nach einem der Ansprüche 4-6, wobei das Verfahren folgende Schritte umfasst:
• Einrichten (501) des Systems und Ausführung von Verkehrsmessungen durch die Vorrichtungen (161, 164, 165), die gestaltet sind um Verkehr zu messen, wohingegen das Systemeinrichten das Definieren von Behälteridentifikatoren, Typen von Behältern (150) an vorgegebenen Positionen, Typen von Fluiden, die in diesen Behältern verwendet werden, und/oder Information darüber, ob die Behälter nachfüllbar oder wegwerfbar sind, umfasst,
• Prognostizieren (502) Stoßereignisses basierend auf den Messungen und, im Fall, dass bestimmt wird, dass ein hohes Risiko eines Stoßes mit einer Sperre an einer vorgegebenen Position besteht, Vorbereiten, für einen oder mehrere Behälter in der Nähe der Position, eines Satzes an Parametern (503) basierend auf den Messungen, und
• Erzeugen und Senden (504)eines Steuersignals an die zuvor identifizierten Behälter.

## Revendications

1. Barrière routière comprenant un rail (110) monté sur une rangée d'éléments de support (120) au moyen de tiges (130), ladite barrière routière comprenant en outre des contenants (150) avec un fluide montés entre le rail (110) et les éléments de support (120), les contenants (150) étant conçus pour absorber l'énergie d'un impact d'un véhicule contre le rail (110), **caractérisée en ce que** les contenants (150) comprennent un dispositif de commande de sortie du fluide contrôlable (155) connecté de manière à pouvoir communiquer avec un récepteur (156) d'un signal de contrôle.

2. Barrière routière selon la revendication 1, **caractérisée en ce que** les éléments de support (120) dans la rangée sont raccordés à un élément de renforcement allongé (140) parallèle au rail (110).

3. Barrière routière selon l'une quelconque des revendications précédentes, **caractérisée en ce que** le contenant de fluide (150) est un contenant comprenant un dispositif de commande du niveau de fluide contrôlable (155).

4. Système de sécurité routière comprenant la barrière routière selon l'une quelconque des revendications 1 à 3 et un module de suivi de véhicule (160) comprenant des dispositifs (161, 164, 165) conçus pour mesurer le trafic et un dispositif d'analyse de trafic (162) connecté de manière à pouvoir communiquer, au moyen d'un émetteur (163) avec un récepteur (156), pour transmettre le signal de contrôle.

5. Système selon la revendication 4, **caractérisé en ce que** les dispositifs de mesure de trafic comprennent des caméras (161), des capteurs de poids (164) et/ou des boucles d'induction (165).

6. Système selon la revendication 4 ou 5, **caractérisé en ce que** le dispositif permettant le suivi d'analyse (162) est conçu pour déterminer le poids, la vitesse et/ou une zone d'impact estimée d'un véhicule dans la barrière (100).

7. Procédé permettant le contrôle d'une barrière routière au sein du système de sécurité routière selon l'une quelconque des revendications 4 à 6, ledit procédé comprenant les étapes de :
• mise en place (501) du système et exécution des mesures de trafic par les dispositifs (161, 164, 165) conçus pour mesurer le trafic, tandis que la configuration du système implique la définition d'identificateurs de contenants, des types de contenant (150) aux emplacements donnés, des types de fluides utilisés dans ces contenants et/ou des informations pour savoir si les contenants sont soit rechargeables soit jetables ;
• prédiction (502) d'un événement d'impact sur la base des mesures et pour le cas où un risque élevé de collision avec une barrière à un endroit donné est établi, préparation d'un ensemble de paramètres (503) basés sur les mesures pour un ou plusieurs contenants à proximité de l'emplacement ; et
• génération et envoi (504) d'un signal de contrôle aux contenants identifiés précédemment.
